Europäisches Patentamt

European Patent Office

Office européen des brevets

(11) Publication number: **0 148 659**
**A2**

# EUROPEAN PATENT APPLICATION

(21) Application number: 84402390.3

(22) Date of filing: 23.11.84

(51) Int. Cl.⁴: **G 09 G 1/28**

(30) Priority: 25.11.83 JP 221865/83

(43) Date of publication of application: **17.07.85**
Bulletin 85/29

(84) Designated Contracting States: **DE FR GB NL**

(71) Applicant: **SONY CORPORATION,**
**7-35 Kitashinagawa 6-Chome Shinagawa-ku,**
**Tokyo 141 (JP)**

(72) Inventor: **Maeda, Satoru c/o SONY CORPORATION,**
**7-35 Kitashinagawa 6-chome, Shinagawa-ku Tokyo (JP)**

(74) Representative: **Descourtieux, Philippe et al, CABINET**
**BEAU de LOMENIE 55 rue d'Amsterdam, F-75008 Paris**
**(FR)**

(54) A video display control circuit.

(57) A circuit for controlling the display of a digital video signal includes a video random access memory (1) for storing original video data to be displayed on a cathode ray tube display, a main look-up table memory (5) containing expanded color display data and arranged to be addressed by the output of the video random access memory (1), with its output connected to corresponding digital-to-analog convertors (8, 9, 10) for providing an analog signal for subsequent display, a buffer look-up table memory (13) connected to provide new display data to the main look-up table memory (5), with such new display data being supplied to the buffer look-up table memory (13) from a central processing unit, and control circuit (11, 3, 24) connected to both look-up table memories (5, 13) to cause display data to be replaced in the main look-up table memory (5) by display data read into the buffer look-up table memory (13) from the central processing unit during a non-access operation of the video random access memory (1).

## BACKGROUND OF THE INVENTION

Field of the Invention:

This invention relates generally to a video display control circuit for use with character and picture-image display systems and, more particularly, to a control circuit for improving the color hue and image gradation of a color video display.

Description of the Background:

A system has been proposed for use with videotext, teletext, personal computers, and the like with the object of enhancing the color expression or reproduction function by using a color look-up table memory. The look-up table memory contains enhanced color display information that is accessed by the actual video data. More specifically, if in such proposed system each dot or pixel of a video display is expressed as four-bit display data, which may be designated $B_0$ to $B_3$ and which may correspond to red (R), green (G), blue (B) and luminance (Y), then this four-bit display data, $B_0$ to $B_3$ can be stored in a video random access memory (RAM) in accordance with the scanning operation of a television monitor and ultimately supplied as addresses $AD_0$ to $AD_3$, respectively, to a look-up table memory. In a typical look-up table memory proposed for this use, each address might store 12 bits designated as $D_0$ to $D_{11}$ and, accordingly, such look-up table memory will have a capacity of 192 bits based on 12 (bits) x 16 (addresses).

When the look-up table memory is addressed by the video data $B_0$ to $B_3$, corresponding output data $D_0$ to $D_{11}$ are

obtained and this data is then typically fed out in three groups as $D_0$ to $D_3$, $D_4$ to $D_7$, and $D_8$ to $D_{11}$, respectively, and supplied to digital-to-analog (D/A) convertors wherein these data words are converted to analog voltages Er, Eg, and Eb, respectively. These analog voltages Er, Eg, and Eb are then supplied to a color cathode ray tube (CRT) as the color drive signals for the red, green, and blue colors, respectively.

In implementing the above-described system it has been found that addresses $AD_0$ to $AD_3$ of the look-up table memory can provide 16 addresses ($2^4$) and, thus, the data $D_0$ to $D_{11}$ can assume 4096 different values ($2^{12}$), which correspond to 4096 possible colors. Accordingly, if the look-up table memory is implemented by means of a random access memory, then any 16 arbitrarily chosen colors out of a possible 4096 colors, can be displayed simultaneously by rewriting the data $D_0$ to $D_{11}$ in the random access memory for addressing by the video data.

Therefore, more color hue information and better image gradation can be expressed than is otherwise possible, and a much more colorful picture can be displayed by employing the look-up table memory, even though the random access memory used as the look-up table has a relatively small capacity.

Nevertheless, even though the above-described method provides an improvement in the resultant color picture, the principal drawback is that the data $D_0$ to $D_{11}$ in the look-up table memory can be rewritten only during the vertical or horizontal blanking periods, because the video

data $B_0$ to $B_3$ must be converted to the display data points $D_0$ to $D_{11}$ in the look-up table memory during all of the available time other than the vertical and horizontal blanking periods to perform the television scanning. As a result, when the time comes that the color display data $D_0$ to $D_{11}$ of the look-up table memory are to be rewritten by a central processing unit (CPU), which is typically employed to control the rewriting operations in systems of this sort, the operation of the CPU must always take into consideration the video display timing and, hence, the signal processing operation becomes overly complicated in order to accomodate such timing constraints.

### OBJECTS AND SUMMARY OF THE INVENTION

Accordingly, it is an object of this invention to provide an improved video display control circuit which can eliminate the above-noted short comings inherent in the known video display control circuits.

It is another object of this invention to provide a video display control circuit having an auxiliary or buffer memory in addition to an inherent or basic look-up table memory, by use of which an improved color video display can be realized.

It is a further object of this invention to provide a video display control circuit in which a central processing unit (CPU) can rewrite data into an auxiliary memory independently of the video display timing, so that system software, and its attendant signal processing, can be simplified.

It is a still further object of this invention to provide a video display control circuit, which can reduce the total manufacturing cost of a color video display system.

It is a further object of this invention to provide a video display control circuit that is suitable for use with a video display system adapted to display either characters and or picture images.

In accordance with an aspect of the present invention, an auxiliary memory is provided in addition to an inherent look-up table memory, which is addressed by video data stored in a video RAM. The display data in the inherent look-up table memory is rewritten from the auxiliary or buffer look-up table, instead of directly from a CPU. The CPU writes the display data into the buffer look-up table. memory and transfer of the display data to the main look-up table memory is under the control of a timing signal control generator so that display data can be rewritten at any time, independently of the horizontal or vertical blanking periods.

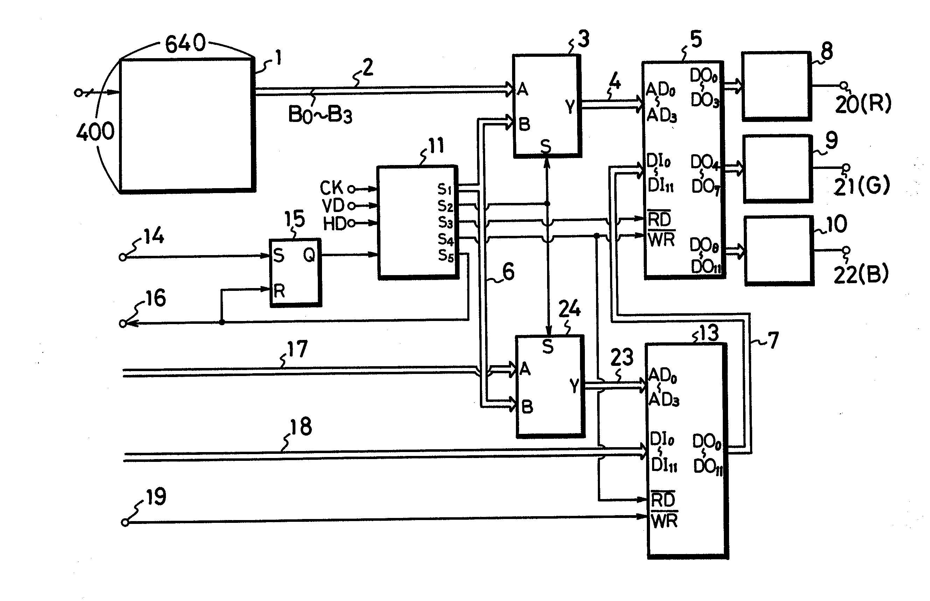

The above and other objects, features, and advantages of the present invention will become apparent from the following detailed description of illustrative embodiments thereof to be read in conjunction with the accompanying drawing.

## BRIEF DESCRIPTION OF THE DRAWING

The single figure herein is a schematic block diagram of an embodiment of a video display control circuit according to the present invention.

## DETAILED DESCRIPTION OF PREFERRED EMBODIMENT

In the circuit of the figure a video random access memory (RAM) 1 is provided having a capacity of 6040 x 400 pixels, for example, in which each pixel consists of a four-bit data word representing red (R), green (G), blue (B), and luminance (Y) and, in keeping with the well-known practice, video RAM 1 is usually accessed in accordance with the scanning signals of a cathode ray tube (CRT) display (not shown). The 4-bit data, $B_0$ - $B_3$, from video RAM 1 are supplied via a 4-bit data bus 2 to an input A of a selector switch 3. Furthermore, the output from terminal Y of selector switch 3 is supplied through a 4-bit data bus 4 to input terminals $AD_0$ - $AD_3$ of a main look-up table memory 5. Main look-up table memory 5 may be advantageously formed of a random access memory (RAM) and in this embodiment employs 4-bit addresses in which data of 12 bits are stored at each address therein. Accordingly, the capacity of main look-up table memory 5 is 192 bits, based on 12 (bits) x 16 (addresses) = 192 (bits).

A buffer look-up table memory 13, which has the same capacity (12 bits x 16 addresses) as that of main or inherent look-up table memory 5 is provided, and this look-up table buffer memory 13 can be also advantageously formed by a random access memory. Data input terminals $DI_0$ - $DI_{11}$ of buffer look-up table memory 13 are connected to receive display data via an[6] input data bus 18 from a central processing unit (not shown). Also obtained from the central processing unit is a write signal fed in at input terminal 19 and supplied to a write input WR of buffer look-up table memory 13.

A timing control signal generating circuit 11 is connected to receive a display clock signal CK, a horizontal synchronizing pulse signal HD, and a vertical synchronizing pulse signal VD and generates therefrom timing control signals $S_1$ - $S_5$. These input signals to timing control signal generating circuit 11 are those normally available in any video display circuit. In a so-called normal mode, corresponding to a time when data are not being rewritten into look-up table 5 or during a period in which ordinary display is carried out, the timing control signals are produced by timing control signal generator 11 such that, $S_2$ equals "0" $S_3$ equals "0", and $S_4$ equals "1". An R/S (reset/set) flip-flop 15 has its set input fed in from terminal 14 from the central processing unit, and this set signal will be present when buffer look-up table memory 13 is addressed by the central processing unit so as to transfer the display data written therein to main look-up memory 5. A second 4-bit selector switch 24 has a selection control input S connected to timing control signal $S_2$ from timing control signal generator 11 and is provided with two input terminals, A and B, and a single output terminal Y. Depending upon the state of the selector control signal $S_2$ applied to control terminal S, either input A or input B will be connected through to output Y. In the circuit described herein, when the 7 selector input signal S, which is derived as timing control signal $S_2$ from timing signal control generator 11, is in the "0" state, output terminal Y will be connected to input terminal A, whereas when the selector input signal S is in the "1" state, output terminal Y will be connected to the other input terminal, B. As a general note, 4-bit selector switch 3 operates in the identical fashion as selector switch 24.

In the so-called normal mode, that is, when the display data stored in main look-up table memory 5 are not being rewritten, signal $S_2$ produced by the timing control signal generator 11 will be in the "0" state. Because this signal $S_2$ is supplied to the selector inputs S of the respective selector switches, 3 and 24, each switch is in the mode in which input A is connected to output Y. Accordingly, video data $B_0 - B_3$ from video RAM 1 are supplied through output data bus 4 from selector switch 3 to addresses $AD_0 - AD_3$ of main look-up table memory 5. Additionally, at that time signal $S_3$ from timing signal control generating circuit 11 will be in the "0" state, and this signal $S_3$ is also fed to read terminal RD of main look-up table memory 5.

Thus, video data $B_0 - B_3$ from video RAM 1 are effectively converted to output display data groups $DO_0 - DO_3$, $DO_4 - DO_7$, and $DO_8 - DO_{11}$, respectively. The digital data thus obtained are then further converted to analog signals by respective digital-to-analog convertors 8, 9, and 10, and the resultant analog signals are fed through output terminals 20, 21, and 22 to the color cathode ray tube display (not shown).

The display data contents, $D_0 - D_{11}$, of main look-up table memory 13 are rewritten by the central processing unit supplying new address signals $A_0 - A_3$, new display data signals $D_0 - D_{11}$, and a write signal WR when control signal $S_2$ is in the "0" state, but such display data signals are not fed directly to main look-up table memory 5. More specifically, when the central processing unit produces the address signals $A_0 - A_3$, these address signals are fed through data bus 17 to input A of 4-bit selector switch 24 and, because at that time control signal $S_2$ is in the "0" state, the output Y of switch 24 is connected to input A. This means that address signals $A_0 - A_3$ are supplied through 4-bit output bus 23 of 4-bit selector switch 24 to address inputs $AD_0 - AD_3$ of buffer look-up table memory 13. Also, the new display data words $D_0 - D_{11}$ from the central processing unit are fed in on 4-bit data bus 18 to data inputs $DI_0 - DI_{11}$ of buffer look-up table memory 13, and the write signal WR on line 19 from the central processing unit is in the "0" state. Accordingly, the new data $D_0 - D_{11}$ from the central processing unit are sequentially written into the buffer look-up table memory 13 at the addresses designated by address signals $A_0 - A_3$. Now, because control signal $S_2$ has a "0" level as described above, the video data $B_0 - B_3$ from video RAM 1 will be converted to display data $D_0 - D_{11}$ by main look-up table memory 5 for subsequent display. Regardless of the specific display operation, the central processing unit can write the new data $D_0 - D_{11}$ in the buffer look-up table memory 13 at any desired time, independently of the video display timing constraints.

After the central processing unit completes the writing of the new data $D_0 - D_{11}$ into buffer look-up table memory 13, the central processing unit will change the write signal $\overline{WR}$ from the "0" state to "1" state and will feed in such write signal at terminal 14 to the set input of RS flip-flop 15. This changing of state of the write signal $\overline{WR}$ will then set flip-flop 15 and its output, at the Q terminal, will become high or "1". This output from RS flip-flop 15 is fed to timing control signal generator 11 to advise it of the demand to rewrite the data.

Upon the occurrence of the first vertical blanking period following the "set" operation of RS flip-flop 15, timing signal $S_2$ from timing control signal generator 11 becomes "1" and, thus, the output Y is connected to input B in each of selector switches 3 and 24. Following that, timing signal $S_3$ assumes a "1" state and the read mode of main look-up table memory 5 is terminated by such state of signal $S_2$. Simultaneously therewith, the timing signal $S_4$ from timing signal generator 11, which is fed to the write input WR of main look-up table memory 5 and also to the read input RD of buffer look-up table memory 13, assumes the "0" state. Additionally, at that specific time timing control signal generator 11 produces a 4-bit address signal $S_1$ that is fed out on 4-bit address bus 6, which is connected to input terminal B of both selector switches 3 and 24. This address signal $S_1$ on 4-bit address bus 6 is then supplied through the respective selector switches such that it is fed through selector switch 24 and is input on 4-bit bus 4 to main look-up table memory 5 as address signals $AD_0$ - $AD_3$ and is fed on 4-bit address bus 23 through selector switch 24 to addresses $AD_0$ - $AD_3$ of buffer look-up table memory 13. This address signal $S_1$ from timing control signal generator 11 is then sequentially stepped through the various possible addresses ranging from to 0 to 15. Accordingly, the data $D_0$ - $D_{11}$ written into buffer look-up table memory 13 are sequentially read out on data bus 7 in accordance with the correspondingly sequentially changing 4-bit address signal $S_1$, and the data $D_0$ - $D_{11}$ thus read out from buffer look-up table memory 13 on bus 7 are sequentially supplied to main look-up table memory 5 and written thereinto.

More specifically, when the vertical blanking period occurs immediately following the "setting" of flip-flop 15 (output at Q goes high), the new display data $D_0$ - $D_{11}$ stored in buffer look-up table memory 13 are transferred to main look-up table memory 15 in a direct memory access (DMA) operation. Since this data transfer occurs and is completed after stepping through 16 addresses and because this data transfer occurs in the DMA mode, data transfer according to the present invention is carried out in an extremely short period of time and, in any event, within the vertical blanking period.

After the data transfer period is ended, or when the address signal $S_1$ counts up to 15 from 0, the timing signal $S_5$ produced by timing control signal generator 11 will assume the "1" state. Signal $S_5$ is fed to both the reset terminal R of flip-flop 15, and to the central processing unit (not shown), as represented at terminal 16.

As a result of this reset operation of flip-flop 15, the output at terminal Q becomes "0", so that timing signal generator circuit 11 has been returned to its initial condition, in which signal $S_2$ is in the "0" state, signal $S_3$

is in the "0" state, and signal $S_4$ is in the "1" state.

Simultaneously, an end-of-data transfer signal $S_5$ is

supplied to the central processing unit at terminal 16 becomes an interrupt signal INT, and then the central processing unit acknowledges that the transfer of data from buffer look-up table memory 13 to main look-up table memory 5 is completed. Accordingly, all circuits are then returned to the normal or original mode and, when the vertical blanking period has ended, the display operation is carried out on the basis of the new data $D_0$ - $D_{11}$ obtained from main

look-up table memory 5. Additionally, central processing unit is placed in a "ready" mode to be prepared for the next rewriting operation.

Therefore, the present invention as described hereinabove operates such that because the display data $D_0$ -

$D_{11}$ in the main look-up memory 5 can be rewritten by transferring new display data $D_0$ - $D_{11}$ previously stored in

buffer look-up table memory 13 during the vertical blanking period, this means that the central processing unit can write the new display data $D_0$ - $D_{11}$ into buffer look-up table memory 13 at any desired time and with any desired timing without consideration of the actual video display

12

timing and, hence, the software and processing required of the central processing unit can be considerably simplified.

Moreover, because the central processing unit need not take into consideration the video display timing, the central processing unit can sufficiently carry out many other signal processing operations, which inherently should be carried out during the vertical blanking period. Additionally, because the central processing unit is free from the restriction that the data of the main look-up table memory must be processed within a predetermined time period in the vertical blanking period, even if the capacity, that is, the data bit number and address number, of main look-up table memory is increased this will present no problem and it is thereby possible to obtain a wider color expression range. Also, even if the capacity of the main look-up table memory is increased it is only necessary to add another memory of correspondingly low cost, and it is not necessary to increase the processing speed of the central processing unit and, in this fashion, system economies are obtained.

While in the above embodiment the central processing unit can only write data into the buffer look-up table memory, this is shown basically for the sake of simplicity and if the central processing unit supplies a read signal to the buffer look-up table memory, the central processing unit can read the data from the buffer look-up table memory at any time and, thus, an even greater or wider range of color expression can be realized.

Although illustrative embodiments of the present invention have been described in detail above with reference

13

to the accompanying drawing, it is to be understood that the invention is not limited to those precise embodiments, and that various changes and modifications can be effected therein by one skilled in the art without departing from the scope or spirit of the invention, as defined by the appended claims.

CLAIMS

1.      Apparatus for controlling the display of digital color video data stored in a video random access memory (1), characterized in that it comprises :

main memory means (5) containing display data and being arranged to be addressed by said video data from said video access memory (1) fed into an address input of said main memory means (5):

buffer memory means (13) having inputs arranged to receive display data and outputs connected to display data inputs of said main memory means (5);

control means (11,3,24) operably connected to said main memory means (5) and said buffer memory means (13) for enabling transfer of said display data in said buffer memory means (13) to said main memory means (5) during a time when said data from said video random access memory (1) is not addressing said main memory means (5); and

digital-to-analog convertor means (8,9,10) connected to outputs of said main memory means (5) for converting display data output therefrom to analog signals for display.

2.      Apparatus according to claim 1, characterized in that said control means (11,3,24) includes timing control signal generator means (11) receiving as input signals a clock signal, a vertical sync signal, and a horizontal sync signal corresponding to said video display for producing a display data address signal fed to said main memory means (5) and to said buffer memory means (13), and for producing read/write timing control signals fed to said main memory means (5) and to said buffer memory means (13) being derived from said input signals fed to said timing control signal generator means (11).

3.      Apparatus according to claim 2, characterized in that said control means further includes a first selector switch (3) for selectively connecting either said video data from said video random access memory (1) or said display data address signals from said timing control signal generator means (11) to said address input of said main memory means (5), and a second selector switch (24) for selectively connecting either said digital display address signals from said timing control signal generator means (11) or said display data to said buffer memory means (13).

4.      Apparatus according to claim 3, characterized in that said digital-to-analog convertor means (8,9,10) includes three digital-to-analog convertors (8,9,10) each connected to receive a proportionate share of data output from said main memory means (5) and for respectively converting said data to corresponding analog signals.

5.      Apparatus according to claim 1, characterized in that said data in said video random access memory (1) is arranged as pixels consisting of n bits and said data in said main memory means (5) comprises m bits per address, where m is greater than n.

6.      Apparatus according to claim 5, characterized in that n = 4, m = 12 and said output of said main memory means (5) is arranged as three separate groups, each group having four bits of data.

7.      Apparatus according to claim 6, characterized in that said digitial-to-analog convertor means (8,9,10) includes three digital-to-analog convertors (8,9,10) each connected to a respective group of said four-bits of data from said main memory means (5).

8.      A system for controlling the display of a video signal on a cathode ray tube display, characterized in that it comprises :

        a video random access memory (1) for storing original video data to be displayed on said cathode ray tube;

main memory means (5) containing display data and being arranged to be addressed by said original video data from said video random access memory;

buffer memory means (13) having inputs to receive display data and outputs connected to data inputs of said main memory means (5);

a control circuit (11,3,24) operably connected to said main memory means (5) and said buffer memory means (13) for enabling transfer of said display data in said buffer memory means (13) to said main memory means (5) during a time when said original video data in said video random access memory (1) is not addressing said main memory means (5); and

digital-to-analog convertor means (8,9,10) connected to outputs of said main memory means (5) for converting display data output therefrom to analog signals fed to said cathode ray tube display.

9. Apparatus according to claim 8, characterized in that said control circuit (11,3,24) includes a timing control signal generator (11) having inputs connected to a clock signal, a vertical synchronization signal, and a horizontal synchronization signal, corresponding to said video display, for producing display data address signals fed to said main memory means (5) and said buffer memory means (13) and for producing timing control signals fed to said main memory (5) and said buffer memory means (13).

10. A system according to claim 9, characterized in that said control circuit (11,3,24) includes a first selector switch (3) for selectively connecting either said data from said video random access memory (1) or said display data address signals from said timing control signal generator (11) to said address terminals of said main memory means (5), and a second selector switch (24) for selectively connecting either said display data address signal from said control signal generator (11) or said display data to said buffer memory means (13).

11. A system according to claim 10, characterized in that said digital-to-analog convertor means (8,9,10) includes three digital-to-analog convertors (8,9,10) each connected to receive a proportionate share of data output from said main memory means (5) and for respectively converting said data to corresponding analog signals.

12. A system according to claim 8, characterized in that said original video data in said video access memory (1) is arranged as pixels consisting of n bits and said display data in said main memory means comprises m bits per address, where m is greater than n.

13. A system according to claim 12, characterized in that n = 4, m = 12, and said output of said main memory means (5) is arranged as three separate groups, each group having four bits of data.

14. A system according to claim 13, characterized in that said digital-to-analog convertor means (8,9,10) includes three digital-to-analog convertors (8,9,10) each connected to a respective group of said four-bits of data from said main memory means (5).

15. A system according to claim 8, characterized in that said control means (11,3,24) includes a flip-flop circuit (15) connected to said timing signal control generator (11) for producing a signal indicating the end of an address sequence.

16. A video display control circuit for controlling the display of a video signal on a cathode ray tube, characterized in that it comprises :

a video random access memory (1) arranged to store digital values of said video signal and producing outputs therefrom representing pixels of said video signals :

a main look-up table memory (5) having address inputs, data inputs, and data outputs;

a buffer look-up table memory (13) having address inputs, data inputs connected to receive display data, and data outputs connected to said data inputs of said main look-up table (5);

a timing control signal generator (11) receiving horizontal and vertical sync video signals and a video clock signal for producing therefrom sequential address signals and timing and control signals fed to said main look-up table memory (5) and said buffer look-up table memory (13);

first selector switch means (3) having an output connected to said address inputs of said main look-up table memory (5) and for selectively connecting outputs from said video random access memory (1) or said sequential addresses from said timing control signal generator (11) to said address inputs of said main look-up table memory (5) in response to said control signal from said timing signal generator (11);

second selector switch means (24) having an output connected to said address inputs of said buffer look-up table memory (13) for selectively connecting display data address information or said sequential addresses from said timing signal control generator (11) to said output in response to said control signal from said timing signal control generator (11); and

digital-to-analog convertor means (8,9,10) connected to said outputs of said main memory means (5) for converting display data output therefrom to analog signals for display on said cathode ray tube.